# EUROPEAN PATENT SPECIFICATION

(11) **EP 0 756 817 B1**
(45) Date of publication and mention of the grant of the patent: **02.10.2002**
(21) Application number: 96202068.1
(22) Date of filing: 23.07.1996
(51) Int. Cl.: A01F 25/18, A01K 5/02

(54) **A silage system for introducing crop bales into a silo**
Silageverfahren um Futterballen in einen Silo zu stapeln
Système d'ensilage pour introduire des balles de fourrage dans un silo

(30) Priority: 31.07.1995 NL 1000903
(43) Date of publication of application: 05.02.1997
(73) Proprietor: MAASLAND N.V., 3155 PD Maasland (NL)
(72) Inventor: van der Lely, Cornelis, 6300 Zug (CH)
(74) Representative: Corten, Maurice Jean F.M.

(56) References cited:
- DE-A- 1 757 145
- DE-A- 2 019 671
- DE-A- 2 226 075
- DE-A- 3 118 803
- DE-B- 1 263 391

## Description

The invention relates to a silage system.

A silage system is known from DE-A-20 19 671 for crops being in bulk.

The invention aims at a silage system in which crop bales are stacked automatically without the intervention of an operating person and automatically discharged from the silo and placed on the conveyor.

According to the invention this is achieved in a silage system comprising the features of claim 1. In this manner, also the feeding of the animals can be effected more quickly and, possibly, fully automatically. This procedure requires less physical effort, while enabling to work more quickly and, consequently, to save tiresome working hours. Because the crop bales are stored in a silo, they do not need to be wrapped up in plastic sheeting, so that the farmer can refrain from purchasing a relatively expensive machine for providing each bale with plastic sheeting. The conditioned storage of the crop bales in the silo also obviates the drawback constituted by the fact that the plastic sheeting is easily damaged as a result of which the quality of the crop bales decreases to a considerable extent. Additionally, upon using the crop bales stored in the silo, there remain no residual materials, such as the plastic sheeting, which, besides, has to be destroyed in an environment-friendly way.

In a preferred embodiment according to the invention, the conveyor comprises at least two conveyor belts extending in different directions.

According to again another inventive feature, the conveyor belts can be driven at variable speed. By controlling the speed at which the crop bales are transported to the animals, it will be possible to adjust the dosage in which the crop bales are supplied.

In a preferred embodiment according to the invention the stable or cowshed includes a first accommodation for the animals being provided with a conveyor belt by means of which part of the bales can be fed to high-productive cattle, and another accommodation being provided with a conveyor belt by means of which bales can be supplied to less productive cattle. This procedure renders it possible to split up the cattle into two or more groups and to supply an optimal quantity of bulkage per group.

According to a further inventive feature, the crop bales are stacked automatically in the silo.

For a better understanding of the invention and to show how the same may be carried into effect, there will now be described, by way of example and with reference to the accompanying drawings, an embodiment in which:
Figure 1 shows, in plan view, a silage system according to the invention;
Figure 2 shows a diagram of the various activities, measured in hours, one person has to carry out in order to harvest five ha of crop and to store same in the silo in ten hours.

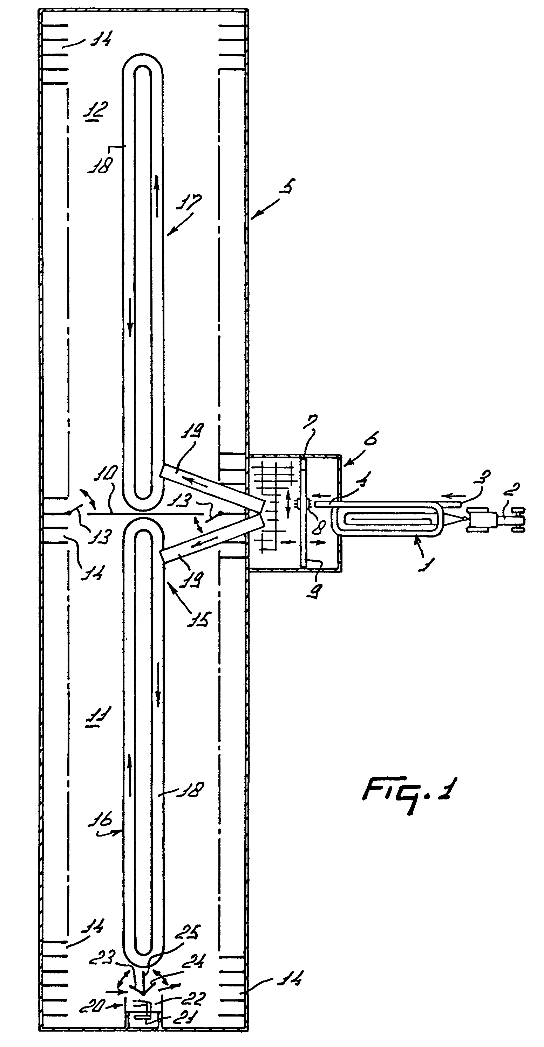

In a plan view according to Figure 1 there is shown a bale wagon 1 driven by a tractor 2, by means of which bale wagon bales of crop, such as hay or straw, can be transported. The bale wagon 1 is provided at its front side with a pick-up device 3, by means of which the crop bales can be loaded from the field onto the bale wagon 1. The bale wagon 1 is provided at its rear side with a discharge device 4, by means of which the crop bales can be discharged from said bale wagon 1.

Figure 1 furthermore shows a cowshed 5 including a silo 6. The silo 6 comprises a lifting device 7, by means of which crop bales can be displaced in the transversal, vertical and longitudinal direction of the silo 6. The lifting device 7 includes a gripper 8 capable of being moved along a rail 9. The rail 9 can be moved along (non-shown) guide means provided on the sidewalls of the silo 6.

By means of a wall 10, the cowshed 5 is divided into a first accommodation 11 for high-productive cows and a second accommodation 12 for less productive cows. In the wall 10 there are arranged computer-controlled doors 13. The accommodations 11 and 12 are further provided with cubicles 14.

The first accommodation 11 and the second accommodation 12 are provided with a conveyor 15, by means of which crop bales can be transported from the silo 6 to the animals. The conveyor 15 comprises a first conveyor belt 16, disposed in the first accommodation 11, and a second conveyor belt 17, disposed in the second accommodation 12. The conveyor belts 16 and 17 include a loop-shaped conveyor floor 18, by means of which the crop bales can be displaced in the longitudinal direction of the cowshed 5. The first conveyor belt 16 and the second conveyor belt 17 further comprise a supply conveyor floor 19 extending into the silo 6. By means of the supply conveyor floor 19, crop bales can be displaced from the silo 6 to the conveyor belts 16 and 17. For that purpose, the crop bales are discharged by means of the gripper 8 from the silo 6 and placed on the supply conveyor floor 19. In the present embodiment, the lifting device 7 is computer-controlled and fully automatic. By means of the (non-shown) computer, the high-productive animals can be provided with a higher dosage of bulkage than the less productive animals. For that purpose, the conveyor belts 16 and 17 and the supply conveyor floor 19 are drivable at variable speed.

In the first accommodation 11 for the high-productive animals, there is disposed a milking robot 20 at one end of the loop-shaped conveyor floor 18. The milking robot 20 comprises an arm 21, by means of which (non-shown) teat cups can automatically be connected to the teats of an animal to be milked. The milking robot 20 further comprises a milk box 22 including a computer-controlled entrance door 23 and a computer-controlled exit door 24. Between the end of the first conveyor belt 16 and the milk box 22, there is disposed a fencing 25 in such a way that the milking robot 20, the fencing 25 and the first conveyor belt divide the first accommodation 11 in the longitudinal direction into two areas.

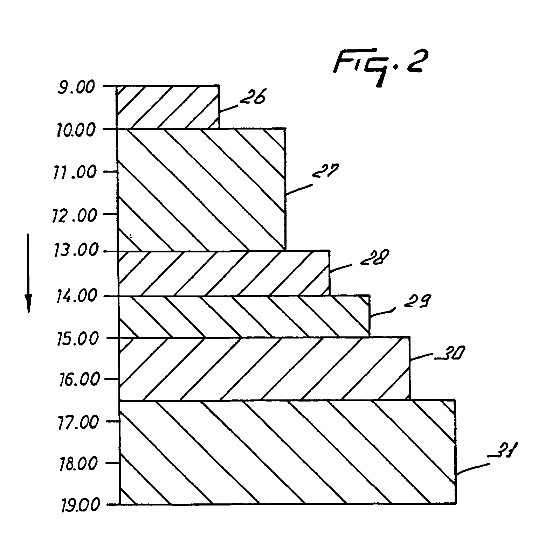

Figure 2 shows a diagram of the consecutive activities one person has to carry out for harvesting approximately five ha of crop and storing same in the silo 6.
- The first activity is shown in the first section 26 and relates to mowing of the field and crushing of the crop in one hour.
- The second activity is shown in the second section 27 and relates to tedding of the crop in a number of working runs in three hours.
- The third activity is shown in the third section 28 and relates to raking up of the crop in one hour.
- The fourth activity is shown in the fourth section 29 and relates to pressing of bales in one hour.
- The fifth activity is shown in the fifth section 30 and relates to collecting of bales in an hour and a half.
- The sixth activity is shown in the sixth section 31 and relates to bringing the crop bales from the field to the silo 6 and stacking same therein in two hours and a half.

The above-mentioned silage system may be designed fully automatically or semi-automatically.

## Claims

1. A silage system comprising:
a stable or cowshed (5), a silo (6) in which bales of crop such as hay, grass or similar crops are storable, said silo (6) comprising a floor and a lifting device (7), on which floor the crop bales are placeable by means of the lifting device (7) including a gripper (8);
a bale wagon (1) for transporting bales of crop into the silo (6),
a conveyor (15) comprising a conveyor belt (16, 17) with a conveyor floor. (18), said conveyor (15) being adapted to cooperate with said lifting device (7), said conveyor (15) transporting crop bales from the silo (6) to the animals, such as cows,
said conveyor (15) including a supply conveyor floor (19) extending upto the lifting device (7), said gripper (8) being adapted to discharge crop bales from the silo (6) and place crop bales on the supply conveyor floor (19).

2. A silage system as claimed in claim 1, **characterized in that** the conveyor (15) comprises at least two conveyor belts (16, 17) extending in different directions.

3. A silage system as claimed in claim 1 or 2, **characterized in that** the conveyor belts (16, 17) can be driven at variable speed.

4. A silage system as claimed in claim 2, **characterized in that** the stable or cowshed (5) includes a first accommodation (11) for the animals being provided with a conveyor belt (16) by means of which part of the bales can be fed to high-productive cattle, and another accommodation (12) being provided with a conveyor belt (17) by means of which bales can be supplied to less productive cattle.

5. A silage system as claimed in any one of the preceding claims, **characterized in that** the lifting device (7) is computer-controlled.

6. A silage system as claimed in any one of the preceding claims, **characterized in that** the crop bales are stacked automatically in the silo (6).

## Patentansprüche

1. Silagesystem mit:
einem Stall oder Kuhstall (5), einem Silo (6), in dem Ballen von Erntegut, wie z. B. Heu, Gras oder ähnliches Gut, gelagert werden können, wobei der Silo (6) einen Boden und eine Hebevorrichtung (7) umfaßt, wobei die Gutballen auf dem Boden mit Hilfe der einen Greifer (8) aufweisenden Hebevorrichtung (7) abgelegt werden können,
einem Ballenwagen (1) zum Transportieren von Gutballen in den Silo (6),
einem Förderer (15), der ein Förderband (16, 17) mit einem Förderboden (18) umfaßt, wobei der Förderer (15) dazu ausgebildet ist, mit der Hebevorrichtung (7) zusammenzuwirken, wobei der Förderer (15) Gutballen von dem Silo (6) zu den Tieren, wie z. B. Kühen, transportiert,
wobei der Förderer (15) einen Zuführförderboden (19) aufweist, der sich bis zu der Hebevorrichtung (7) erstreckt, wobei der Greifer (8) dazu ausgebildet ist, Gutballen aus dem Silo (6) zu entnehmen und Gutballen auf den Zuführförderboden (19) zu legen.

2. Silagesystem nach Anspruch 1,
**dadurch gekennzeichnet, daß** der Förderer (15) mindestens zwei Förderbänder (16, 17) umfaßt, die sich in unterschiedliche Richtungen erstrecken.

3. Silagesystem nach Anspruch 1 oder 2,
**dadurch gekennzeichnet, daß** die Förderbänder (16, 17) mit veränderlicher Geschwindigkeit angetrieben werden können.

4. Silagesystem nach Anspruch 2,
**dadurch gekennzeichnet, daß** der Stall oder Kuhstall (5) eine erste Unterkunft (11) für die Tiere aufweist, die mit einem Förderband (16) versehen ist, mittels dessen ein Teil der Ballen Rindern mit hoher Milchleistung zugeführt werden kann, sowie eine weitere Unterkunft (12), die mit einem Förderband (17) versehen ist, mittels dessen Rindern mit geringerer Milchleistung Ballen zugeführt werden können.

5. Silagesystem nach einem der vorhergehenden Ansprüche,
**dadurch gekennzeichnet, daß** die Hebevorrichtung (7) computergesteuert ist.

6. Silagesystem nach einem der vorhergehenden Ansprüche,
**dadurch gekennzeichnet, daß** die Gutballen automatisch in dem Silo (6) gestapelt werden.

## Revendications

1. Système d'ensilage comprenant :
une étable (5), un silo (6) dans lequel des balles de récolte telles que du foin, de l'herbe ou des récoltes similaires peuvent être stockées, ledit silo (6) comprenant un plancher et un dispositif de soulèvement (7), plancher sur lequel les balles de récolte peuvent être placées au moyen du dispositif de soulèvement (7) comprenant une pince (8),
un wagon pour les balles (1) destiné à transporter des balles de récolte jusque dans le silo (6),
un convoyeur (15) comprenant une courroie transporteuse (16, 17) avec un plancher de transport (18), ledit convoyeur (15) étant adapté pour coopérer avec ledit dispositif de soulèvement (7), ledit convoyeur (15) transportant des balles de récolte depuis le silo (6) jusqu'aux animaux, tels que des vaches,
ledit convoyeur (15) comprenant un plancher de transport d'alimentation (19) qui s'étend jusqu'au dispositif de soulèvement (7), ladite pince (8) étant adaptée pour décharger des balles de récolte depuis le silo (6) et pour placer des balles de récolte sur le plancher de transport d'alimentation (19).

2. Système d'ensilage selon la revendication 1, **caractérisé en ce que** le convoyeur (15) comprend au moins deux courroies transporteuses (16, 17) qui s'étendent dans des directions différentes.

3. Système d'ensilage selon la revendication 1 ou 2, **caractérisé en ce que** les courroies transporteuses (16, 17) peuvent être entraînées à une vitesse variable.

4. Système d'ensilage selon la revendication 2, **caractérisé en ce que** l'étable (5) comprend un logement (11) pour les animaux qui est muni d'une courroie transporteuse (16) au moyen de laquelle une partie des balles peut être distribuée à un bétail très productif, et un autre logement (12) est muni d'une courroie transporteuse (17) au moyen de laquelle des balles peuvent être distribuées à un bétail moins productif.

5. Système d'ensilage selon l'une quelconque des revendications précédentes, **caractérisé en ce que** le dispositif de soulèvement (7) est commandé par ordinateur.

6. Système d'ensilage selon l'une quelconque des revendications précédentes, **caractérisé en ce que** les balles de récolte sont empilées automatiquement dans le silo (6).
